# EUROPÄISCHE PATENTANMELDUNG

(11) **EP 1 652 818 A1**
(43) Veröffentlichungstag der Anmeldung: **03.05.2006**
(21) Anmeldenummer: 04400053.7
(22) Anmeldetag: 26.10.2004
(51) Int. Cl.: C01F 11/18, A61K 33/10

(54) **Hochreines Calciumcarbonat**

(71) Anmelder: Dr. Zinkeisen, Behrmann & Co.m.b.H., 25541 Brunsbüttel (DE)
(72) Erfinder: Hartmann, Marwin, 25541 Brunsbüttel (DE)

(57) **Zusammenfassung**

Die Herstellung von Pharm.-Eur.-Calciumcarbonate aus geleerten und gereinigten Muschel-Schalen als Rohstoffbasis verhindert, dass dieses sehr reine aus arktischem Ozean stammende Kalzium und Kohlendioxid ungenutzt auf Deponien gelagert wird.

Es werden nur zwei Produkte zur Trennung der Schalen-Protein-Matrix vom nachwachsenden Kalziumcarbonat in der Startphase des Prozesses benötigt. Dann wird das reine Endprodukt durch die kreisförmige Prozessführung ohne weitere Substitutionen gewonnen. Der Energie-Eintrag erfolgt bei der Kalziumoxidgewinnung wie üblich und kann durch den Einsatz von Wärmetauschern für die Prozessführung genutzt werden. Ohne den Verbrauch an Fremd-Produkten bleibt der hohe Reinheitsgrad erhalten. Es wird lediglich die Protein-Matrix von dem Calcit der Muschelschalen getrennt und unter Verwendung des vorhandenen Kalzium und Kohlendioxid zum reinsten Kalziumcarbonat synthetisiert. Es wird kein Kolendioxid emittiert und der Wasserverbrauch ist äußerst gering. Alle Bestandteile der Muschelschalen können verlustfrei zur Wertschöpfung beitragen. Dem Ocean wird Kohlendioxid entnommen.

Das Verfahren ist natürlich nicht allein auf den Einsatz von Muschelschalen als Rohstoffbasis beschränkt. Die meisten natürlichen Kalziumcarbonat-Quellen sind ebenfalls als Rohstoff-Basis geeignet. Dabei bleiben die Vorteile der Umweltfreundlichkeit ebenso erhalten.

Das gewonnene Pharm.-Euro.-Calciumcarbonat kann ohne weitere Reinigung zur direkten Verwendung oder zur Herstellung diverser Kalziumsalze in der Pharmazeutischen-, Kosmetischen-, Lebensmittel- und Futtermittel-Industrie verwendet werden.

## Beschreibung

Calciumcarbonat (CaCO₃) aus Muschelschalen oder anderen Calciumquellen die CaCO₃ enthalten, werden in einem Schacht- oder Drehtrommel-Ofen auf max. 1000 °C erwärmt, bis durch das Entweichen von gasförmigem Kohlendioxid (CO₂) daraus Calciumoxid (CaO) entstanden ist. Das Calciumoxid wird im Reaktor 1 mit Ammoniumchlorid (NH₄Cl) erwärmt.

Dabei bildet sich Calciumchlorid (CaCl₂), welches in Ethanol (C₂H₅OH) gelöst wird. Das gleichzeitig entstandene Ammoniak-Gas (NH₃) reagiert im Reaktor 2 mit Wasser (H₂O) zur Ammoniumhydroxid- Lösung (NH₄OH) und diese mit dem Kohlendioxid-Gas aus dem Schacht- oder Drehtrommel-Ofen zu Ammonimcarbonat [(NH₄)₂CO₃].

Die alkoholische Calciumchlorid-Lösung aus Reaktor 1 wird einer Klarfiltration in den Reaktor 3 unterzogen und reagiert dort mit der Ammoniumcarbonat- Lösung aus Reaktor 2 zu dem Zielprodukt Ph.Eur. Calciumcarbonat und dem Kreislaufprodukt Ammoniumchlorid.

Das Calciumcarbonat ist in Ethanol unlöslich und kann durch Filtration und Waschen mit Ethanol sehr leicht in sehr reiner Qualität gewonnen und getrocknet werden.

Das dabei abgetrennte Ammoniumchlorid wird im Reaktor 1 dem Prozess erneut zugeführt.

Der Ethylalkohol ist durch Destillation ebenfalls erneut dem Prozess sauber zugänglich.

Vorzugsweise wird das Waschen und Trocknen des Calciumcarbonates in einem Filtertrockner vorgenommen. Denkbar ist jedoch auch Zentrifugieren oder Filtrieren mit einer folgenden Trocknung. Das Ph.Eur. Calciumcarbonat kann verwendet werden.

### Reaktionen:

| | | | |
|---|---|---|---|
| 1. | CaCO₃ + Wärme 1000°C | → | CaO + CO_{2 gas} |
| 2. | CaO + 2 NH₄Cl + Wärme | → | CaCl₂ + H₂O + 2 NH_{3 gas} |
| 3. | 2 NH₃ + H₂O + CO₂ | → | (NH₄)₂CO₃ |
| 4. | CaCl₂ + (NH₄)₂CO₃ | → | **CaCO**_{**3**} + 2 NH₄Cl |

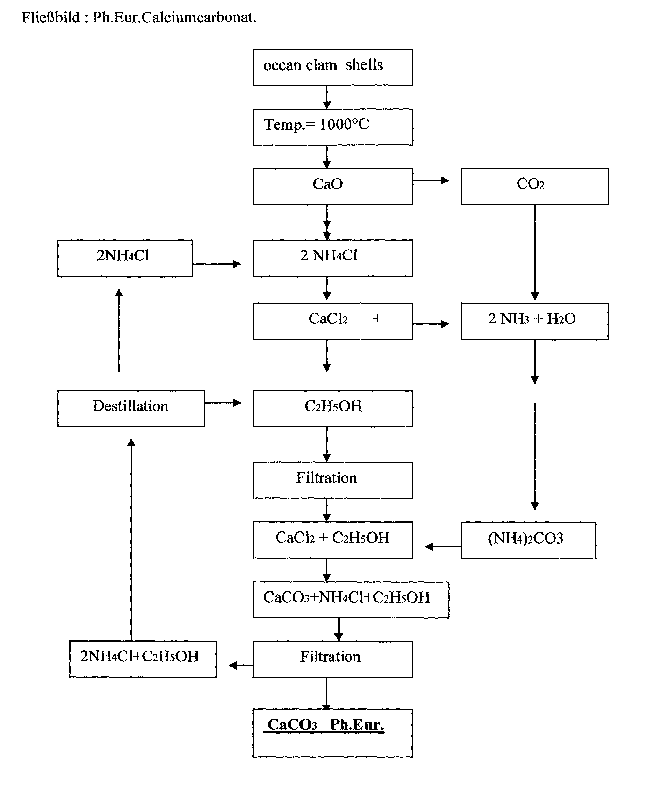

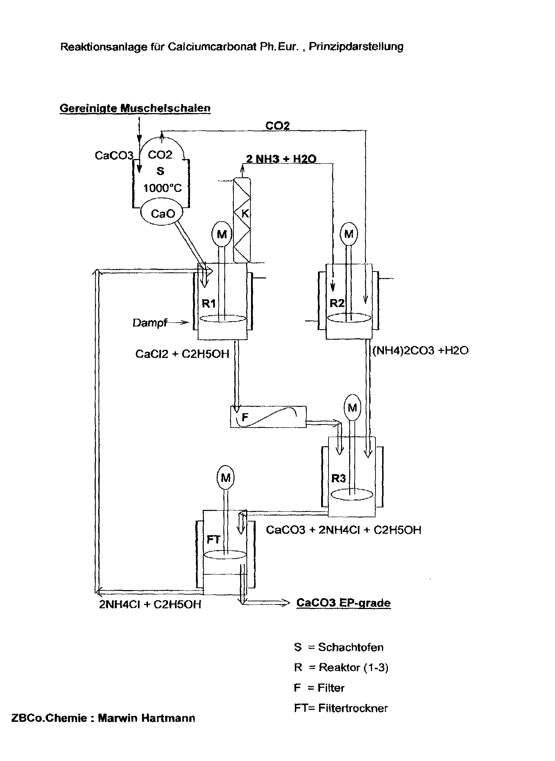

## Patentansprüche

1. Es wird beantragt die Herstellung von sehr reinem Calciumcarbonat, welches die Substanzkriterien der Monographien europäischer Pharmakopöen erfüllt zu patentieren.
Als Rohstoff werden vorzugsweise Muschelschalen (ocean clam shell) eingesetzt welche in den Gewässern um Island gefischt werden. Nachdem das Muschelfleisch entnommen ist, werden die leeren Schalen gereinigt. An der äußeren Proteinmatrix der Schalen haftet noch Material vom Meeresboden. Dies können Schwermetalloxide sein, die entfernt werden müssen. Durch vermischen der Schalen mit Ammoniumchlorid und Erwärmen reagieren die Oxide zu löslichen Metallchloriden und können durch Waschen mit Wasser oder Alkoholen von der Schalenoberfläche entfernt werden. Um noch vorhandenes organisches Substrat und weitere Verunreinigungen an der Schalenoberfläche zu entfernen wird das Calciumcarbonat der Muschelschalen nach diesem speziellem Verfahren aufgelöst und durch eine sehr effektive Filtration von allen Verunreinigungen befreit. Danach wird das Calciumcarbonat aus der Lösung selektiv und vollständig abgeschieden. Calciumcarbonat ist in Wasser und dem verwendetem Alkohol unlöslich wodurch es quantitativ abfiltriert und getrocknet werden kann. Die in Lösung verbleibenden Substanzen werden im Kreislauf dem Reinigungsprozess wieder zugeführt. Der Verbrauch von Wasser und Chemikalien wird bei diesem Verfahren vermieden und die Verwendung von aggressiven Chemikalien ist nicht erforderlich.
Der nachwachsende Muschelrohstoff wird bei diesem Verfahren konsequent für die Reaktion im Herstellungsprozess verwendet und anschließend quantitativ für die Synthese des nun gereinigten Ph.Eur. Calciumcarbonat verwendet. Das Calciumcarbonat der ocean clam shell ist extrem rein und erfüllt schon in seiner Ursprungsform die Kriterien der europäischen Pharmakopöen. Bei diesem Verfahren werden alle Verunreinigungen effektiv und schonend durch Auflösen, Filtrieren und wieder Ausfällen quantitativ und umweltschonend entfernt. Das Verfahren kann jedoch auch andere Calciumcarbonatquellen verwenden, welche in großer Zahl vorkommen. Anschließend kann das Ph.Eur. Calciumcarbonat auch noch für die ganze Palette der organischen- und anorganischen- Calciumsalze unter Beibehaltung der Reinheitskriterien als Rohstoffbasis der Ph.Eur. Calciumverbindungen eingesetzt werden.
Die bisher benutzten Verfahren sind unter Verwendung von Säuren zur Auflösung des Calciumrohstoffes nicht so umweltschonend und hinterlassen durch notwendig werdende Neutralisationen unerwünschte Nebenprodukte. Oder es muss durch die Verwendung von weniger reinem Ausgangsmaterial ein komplizierter, teurer und Reststoff erzeugender Reinigungsprozess angeschlossen werden.

2. Die großen Mengen von Muschelschalen, die jährlich bei Fischfabriken in der Größenordnung von 20 000 t anfallen, können bisher keiner wertvollen Verwendung zugeführt werden. Dadurch war es nicht möglich diesen als Reststoff anfallenden nachwachsenden Reinstrohstoff einer sinnvollen Verwendung zuzuführen.

3. Der Patentanspruch wird durch die neue Kombination von Reaktionsschritten und die **dadurch** mögliche Verwendung nachwachsender Muscheln als Calciumquelle für den Gebrauch in der Synthese von Ph.Eur. Calciumsalzen für den Human,- Veterinär- und Kosmetik-Bereich begründet.
Hervorzuheben ist die geringe Anzahl der verwendeten Reagenzien sowie der verlustlose Einsatz durch kreisförmige Führung der Reaktionsschritte. Dies hat zur Folge dass durch die Reaktionen kein Abfall entsteht und der Bedarf an Wasser sehr gering ist.
Die Emission von Kohlendioxid wird völlig verhindert da dies Bestandteil der Kreislaufführung ist. Der Energieeinsatz ist nicht höher als bei dem sonst üblichen Verfahren.
